# EUROPEAN PATENT SPECIFICATION

(11) **EP 3 847 884 B1**
(45) Date of publication and mention of the grant of the patent: **23.08.2023**
(21) Application number: 21150765.2
(22) Date of filing: 08.01.2021
(51) Int. Cl.: A01F 15/07, A01F 15/08

(54) **AGRICULTURAL BALER WITH WRAP COMPLETION DETECTION**
LANDWIRTSCHAFTLICHE BALLENPRESSE MIT WICKELABSCHLUSSERKENNUNG
RAMASSEUSE-PRESSE AGRICOLE AVEC DÉTECTION D'ACHÈVEMENT D'EMBALLAGE

(30) Priority: 09.01.2020 US 202016738531
(43) Date of publication of application: 14.07.2021
(73) Proprietor: CNH Industrial Belgium N.V., 8210 Zedelgem (BE)
(72) Inventor: SIMMONS, Scott C., Lititz, Pennsylvania 17543 (US)
(74) Representative: CNH Industrial IP Department

(56) References cited:
- EP-A1- 2 688 390
- EP-A1- 3 569 055
- US-B1- 9 008 920

## Description

### FIELD OF THE INVENTION

The present invention pertains to agricultural balers, more particularly to wrapping systems for such agricultural baler, and to a method of controlling an agricultural baler.

### BACKGROUND OF THE INVENTION

For many years harvesters, such as agricultural balers, have been used to consolidate and package crop material to facilitate the storage and handling of the crop material for later use. Usually, a mower-conditioner cuts and conditions the crop material for windrow drying in the sun. When the cut crop material is properly dried, a harvester, such as a round baler, travels along the windrows to pick up the crop material and form it into cylindrically-shaped round bales.

More specifically, pickups of the baler gather the cut and windrowed crop material from the ground, then convey the cut crop material into a bale-forming chamber within the baler. A drive mechanism operates to activate the pickups, augers, and a rotor of the feed mechanism. A conventional baling chamber may include a pair of opposing sidewalls with a series of belts that rotate and compress the crop material into a cylindrical shape.

When the bale has reached a desired size and density, a wrapping system may wrap the bale to ensure that the bale maintains its shape and density. For example, a net may be used to wrap the bale of crop material. A knife or severing mechanism may be used to cut the net once the bale has been wrapped. The wrapped bale may be ejected from the baler and onto the ground by, for example, raising a tailgate of the baler. The tailgate is then closed and the cycle repeated as necessary and desired to manage the field of cut crop material.

Wrapping the bale in material helps maintain the shape of the formed bale and protect the bale from, for example, rain or other harmful external conditions. However, in some instances the bale is not wrapped because, for example, the wrapping material is not delivered by the material roll or is wrapped around something besides the bale. In such instances, an unwrapped bale may be inadvertently released, which must be re-baled and wrapped.

EP 2 688 390 A1 discloses an agricultural baler with a bale forming chamber within which a bale of forage material is formed and circumferentially wrapped with wrapping film. A monitoring apparatus for detecting correct circumferential wrapping of the bale comprises a pressure transducer, proximity sensor, or potentiometer for monitoring a diameter of the bale. Upon a signal indicative of a reduction in the diameter of the bale being greater than a predefined diameter reduction a signal is produced indicative of correct circumferential wrapping of the bale.

EP 3 569 055 A1 discloses a round baler with a pick-up unit, a baling chamber with a tailgate and a binding unit. At least one sensor is provided to detect a first tailgate position after the bale formation cycle and a second tailgate position after the binding cycle. A controller determines a tailgate position change between the two tailgate positions and is configured to display the tailgate position change in an indicating unit. The controller (24) selectively actuates the opening of the tailgate.

What is needed in the art is a baler that can address at least some of the previously described issues with known balers.

### SUMMARY OF THE INVENTION

According to a first aspect of the present invention a wrapping system for an agricultural baler with the features of claim 1 is suggested.

According to a second aspect of the present invention a method of controlling an agricultural baler in accordance with claim 8 is suggested.

Further preferred embodiments are defined by the dependent claims.

One possible advantage that may be realized by exemplary embodiments disclosed herein is that the controller can detect when the bale is not being wrapped even if wrapping material is being drawn from the material roll.

Another possible advantage that may be realized by exemplary embodiments disclosed herein is that the controller can output a warning signal if the controller determines that the current size of the bale is not less than the starting size of the bale by the defined amount at an end of the wrap cycle.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1A illustrates a sectional view of an exemplary embodiment of an agricultural baler at a start of a bale formation cycle, provided in accordance with the present disclosure;
FIG. 1B illustrates a sectional view of the agricultural baler of FIG. 1A at an end of the bale formation cycle;
FIG. 2 illustrates a side view of an exemplary embodiment of a wrapping assembly with a duckbill in a home position;
FIG. 3 illustrates a cross-sectional view of the wrapping assembly of FIG. 2 with the duckbill in an insert position;
FIG. 4 illustrates a side view of the wrapping assembly of FIGS. 2-3 and a knife assembly in a cut position;
FIG. 5 illustrates a perspective view of a tow vehicle towing the baler of FIG. 1;
FIG. 6 illustrates a graph of bale size and various signal readings vs. time for a bale that is wrapped normally;
FIG. 7 illustrates a graph of bale size and various signal readings vs. time for a bale that is not wrapped normally;
FIG. 8 illustrates an exemplary graphical user interface presented on a display after receiving a warning signal; and
FIG. 9 is a flowchart illustrating an exemplary embodiment of a method of controlling an agricultural baler, provided in accordance with the present disclosure.

### DETAILED DESCRIPTION OF THE INVENTION

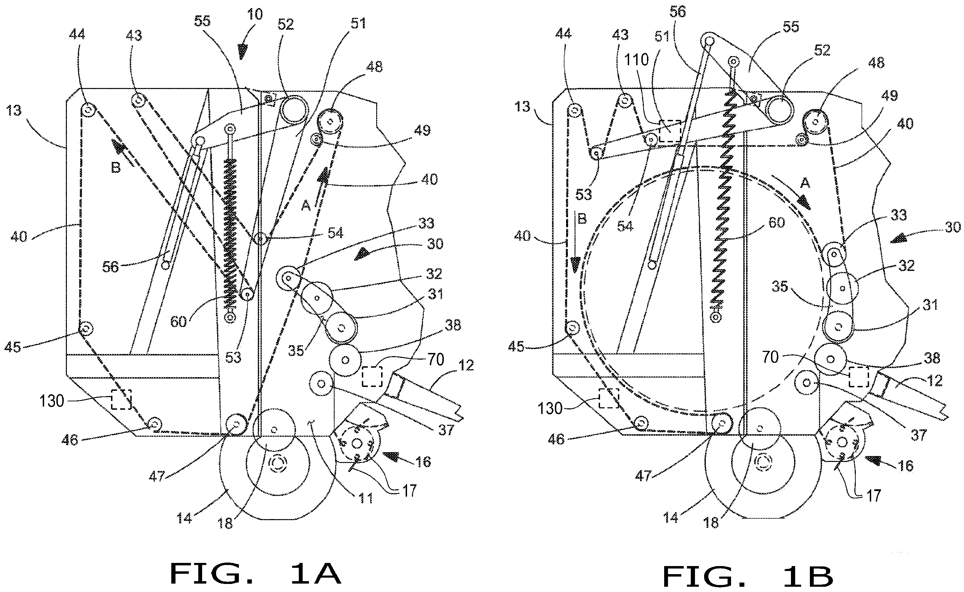

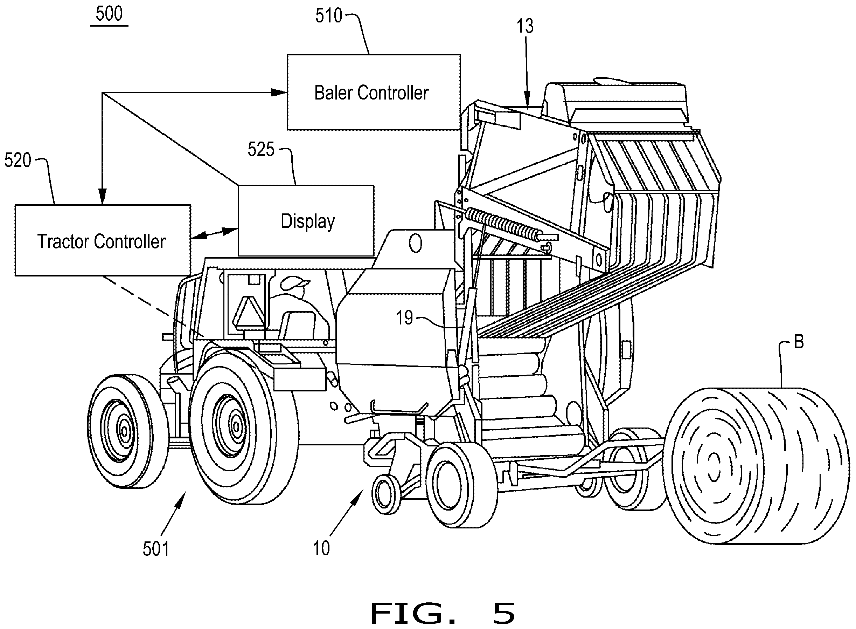

Referring now to the drawings, and more particularly to FIGS. 1A, 1B and 5, an exemplary embodiment of an agricultural baler 10 is illustrated that includes a chassis 11 supported by a pair of wheels 14. A tongue 12 is provided for connection to a tractor 501 (illustrated in FIG. 5). Pivotally connected to the sides of the chassis 11 is a tailgate 13 that may be closed during bale formation or pivoted open by a tailgate actuator 19 (illustrated in FIG. 5), which may also be referred to as a "bale release," to release a fully formed bale. A pickup 16, mounted on the chassis 11, includes a plurality of tines 17 movable in a predetermined path to lift crop material from the ground and deliver it rearwardly toward a rotatably mounted floor roll 18.

A bale forming chamber 20 for forming bales is defined partly by a sledge assembly 30 including a plurality of rollers 31, 32 extending transversely in the arcuate arrangement shown in FIGS. 1A and 1B. Rollers 31, 32 are journalled at their ends in a pair of spaced apart arms 35, one of which is shown. These arms are pivotally mounted inside the chassis 11 on stub shafts for providing movement of sledge assembly 30 between the bale starting position shown in FIG. 1A and the full bale position shown in FIG. 1B. Rollers 31, 32 are driven in a counter-clockwise direction by, e.g., chains and sprockets or gears, connected to and powered by a power source, such as an engine, via a drive shaft 15. A freely rotatable idler roller 33 is also carried by arms 35. Additionally, a starter roll 37, and a fixed roll 38 are located adjacent to roller 31, and are also driven in a counter-clockwise direction.

The bale forming chamber is further defined by an apron assembly 40 including a plurality of continuous side-by-side chains, which also may be referred to as belts, supported by guide rolls 43, 44, 45, 46, 47 rotatably mounted in tailgate 13 and a drive roll 48, mounted on chassis 11. Apron assembly 40 passes between roller 32 on sledge assembly 30 and idler roller 33, and is in engagement only with idler roller 33 and not roller 32 which is located in close proximity to the apron chains to strip crop material from the chains, in addition to its bale forming function. Drive roll 48 is powered via coupling to a coupler 70, which may be a power take-off (PTO) coupled to the tractor 501, and a drive train which moves apron assembly 40 along its changing path, indicated generally by arrows A and B in FIGS. 1A and 1B. Many different types of couplings between the drive roll 48 and the coupler 70 are known, so further description is omitted for brevity. An additional guide roll 49 ensures proper driving engagement between apron assembly 40 and drive roll 48.

A pair of take up arms 51 (only one shown) are mounted to pivot conjointly with a cross shaft 52 between inner and outer positions, shown in FIGS. 1A and 1B, respectively, and carry additional guide rolls 53, 54 for supporting apron assembly 40. Chain tension lever arm 55 is also affixed to shaft 52 to pivot with take up arms 51. A return spring 60 is secured between the chassis 11 and tension lever arm 55 to bias the shaft 52 and take up arms 51 toward the bale starting position (shown in FIG. 1A) and move the take up arms toward the bale starting position following release of a completed bale. An apron tensioning system, which may include a hydraulic bale tension cylinder 56, is mounted between tailgate 13 and take up arms 51 and configured to resist movement of the take up arms 51 from the bale starting position (FIG. 1A) toward the full bale position (FIG. 1B).

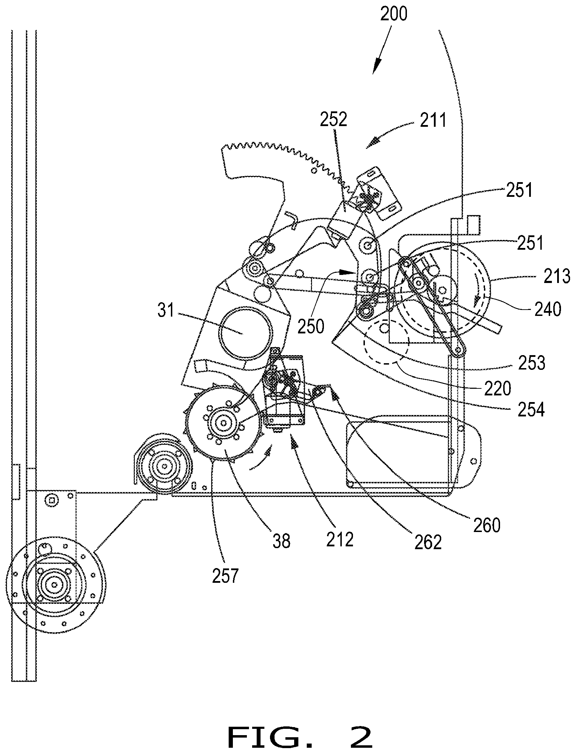

FIGS. 2-4 show an exemplary embodiment of a wrapping system 200 provided according to the present disclosure and comprising wrapping assembly 211 and knife assembly 212. As shown, the wrapping assembly 211 includes a material roll 213, a duckbill assembly 250 including at least one duckbill roll, illustrated as multiple duckbill rolls 251, carried by a duckbill 253, and a duckbill motor 252 coupled to the duckbill 253. The knife assembly 212 may include a movable knife 260 and a knife duckbill 262 for moving the knife 260.

The wrapping assembly 211, including the duckbill assembly 250 and its associated structure and mechanisms may be conventional and common to the structure and operation described in the baler patents referenced above.

As shown, the wrapping material, such as net, may be fed from the material roll 213 and travel over the duckbill rolls 251 and exit a tip 254 of the duckbill 253. The tip 254 of the duckbill 253 serves to pinch the net and prevent the net from snapping back through the duckbill 253 once it is cut. Typically, a portion of net will extend out of the tip after a net knife action. For example, it is common for a section of net that hangs out of the tip of the duckbill and that net tail is where it grabs on to the bale when the duckbill 253 is inserted for the next net wrap cycle.

As shown, the duckbill motor 252 may be dedicated to the duckbill 253, and operation of the duckbill motor 252 functions to insert the duckbill 253 to commence a net wrap cycle and then to retract the duckbill 253 at the end of the wrap cycle once the net has been cut. The duckbill motor 252 is thus configured to move the duckbill 253 between a first position, which may be an insert position, and a second position, which may be a home position, during retraction of the duckbill 253. The duckbill motor 252 may be, for example, a motor that is powered by electricity, hydraulics, and/or pneumatics, as is known. The duckbill rolls 251 function to define the path of the net as it weaves through the duckbill assembly 250 and to ensure the net is stretched to one side of the bale to the other side of the bale. In the operation of the illustrated wrapping assembly 211, the net comes off the bottom of the material roll 213, which, in the figure, rotates clockwise, and goes around the upper side of the upper duckbill roll 251 and then makes essentially an 180-degree turn and then goes on the material roll side of the lower duckbill roll 251 and then through the tip 254 of the duck bill 253. The rotational direction of the material roll 213 is unimportant, but ultimately determines the location where the net leaves the roll, and/or the number and placement of additional rolls needed to direct the net appropriately to the duckbill, and eventually rearward, toward the baling chamber.

The roll 38 closest to the up-cut knife assembly 212 may include ribs 257 disposed about the outside of the roll. Another roll 31 positioned above this roll may also include ribs. A gap or clearance may be formed between these two baling chamber rolls 31, 38 to allow access for the tip 254 of the duckbill 253. As the baling chamber roll 31 rotates, the net pinches between the rolls and the bale and ribs 257 help grabs the net and feed it into the baling chamber and onto the bale. In the illustrated embodiment, the bale may rotate such that the top material moves forward and downward, with respect to the baler, clockwise as shown in the figure, in the chamber and the baling chamber rolls rotate in the opposite direction, here counterclockwise.

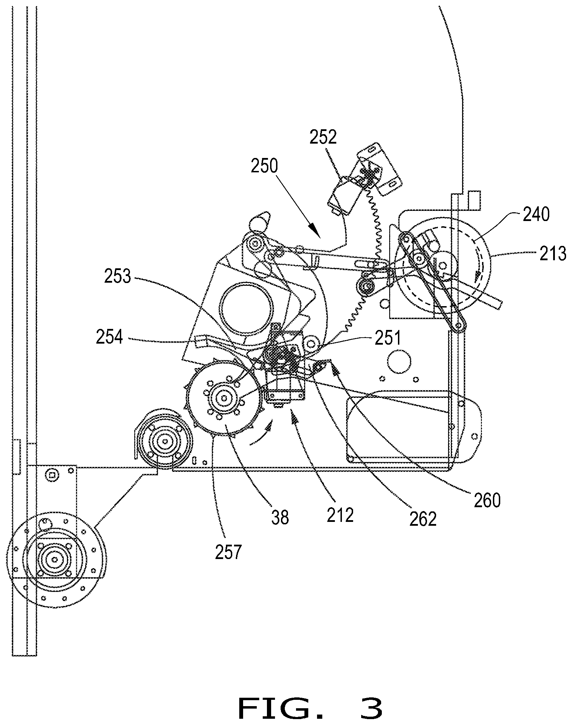

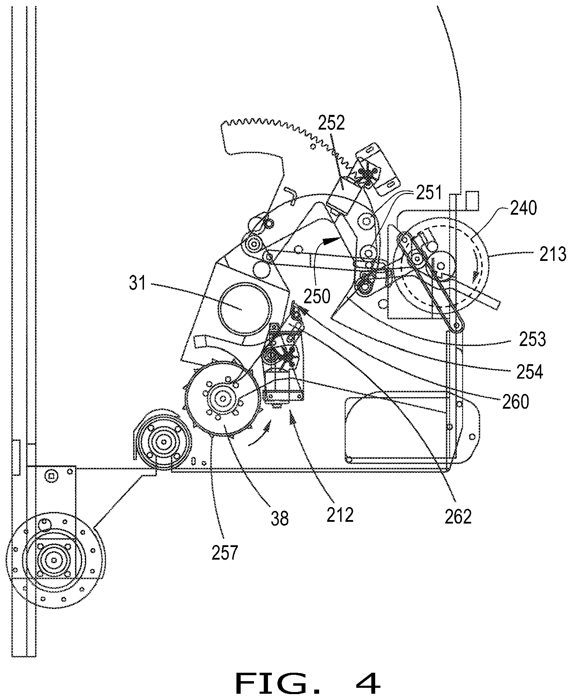

FIG. 2 illustrates the wrapping assembly 211 and the knife assembly 212 in the home position. FIG. 3 illustrates the duckbill 253 in the insert position. FIG. 4 illustrates the wrapping assembly 211 again in the home position with the knife assembly 212 in the cut position.

During a net wrap cycle, the wrapping assembly 211 moves through two positions: the home position to the insert position and back to the home position. In the home position (FIG. 2), the duckbill 253 of the wrapping assembly 211 is in the raised or home position. The home position is typically employed at the time a bale is being formed. At some point in time, the bale forming operation is completed and the time to wrap the bale, which may be referred to as a wrap cycle, occurs. At this time, the duckbill 253 of the wrapping assembly 211 is lowered to the insert position (FIG. 3), where the duckbill 253 rotates into the baling chamber. The duckbill tip 254 fits in between upper and lower baling chamber rolls 31, 38, and the net is pinched between the bale and the lower roll causing the net to start to feed on to the bale. Sensors may be provided to determine when the net is flowing on to the bale. Once it is determined that the net has started wrapping on the bale, the duckbill 253 is retracted out of the baling chamber and returns to the duckbill home position (FIG. 4). Completion of the wrap cycle may be determined using sensors and/or via passage of a specified time period. At this point in the net wrap cycle, the net is still flowing out of the duckbill 253 to the baling chamber. It is also time to cut the net, the operation of which is performed by the knife assembly 212 moving the knife 260 to the cut position.

FIG. 5 illustrates an exemplary embodiment of a baling system 500 provided according to the present disclosure. The baling system 500 includes the baler 10 with a baler controller 510 and a tractor 501 with a tractor controller 520 and a display 525 accessible by an operator in the tractor 501. The display 525 allows for the operator to see various control and status information as well as to enter and configure information for use by the tractor controller 520 and the baler controller 510. The tractor controller 520 and the baler controller 510 are operatively coupled to one another for messaging and data communication, as is known. The display 525 is operatively coupled to the tractor controller 520 and may be operatively coupled to the baler controller 510 directly or indirectly through the tractor controller 520. In some embodiments, the tractor controller 520 and the baler controller 510 are integrated in an ISOBUS system; in such embodiments, the controllers 510, 520 may communicate on the ISOBUS network. It should thus be appreciated that an ISOBUS system may also be the "controller" referred to herein.

In other embodiments, the baler 10 is not connected to the tractor 501 but is connected to other equipment, such as, for example, a harvester or a part of a harvester, such as a cotton picker, or the like. In these embodiments, the other equipment (e.g., harvester) may include a controller, similar to the tractor controller 520, and an operator interface, similar to the display 525.

As illustrated in FIG. 5, the baler 10 can include a tailgate actuator 19 that is coupled to the tailgate 13. The tailgate actuator 19 may be, for example, a hydraulic cylinder that opens the tailgate 13 when activated to release a formed and wrapped bale B.

In known balers, the controller normally signals for a bale to be released when the wrap cycle finishes. However, there are instances when the controller cannot accurately determine that the bale is fully wrapped and the wrap cycle is complete. For example, the wrapping material may sometimes get wrapped around an element of the baler, such as a frame roll. In such a case, the controller may detect that wrapping material has been drawn from the material roll, which would normally indicate that the bale is being wrapped, and incorrectly signal for the tailgate to open and release the unwrapped bale. The released, unwrapped bale would then need to be re-baled and wrapped, which is inconvenient for an operator.

To address some of the previously described issues, and referring to FIG. 1 again, the wrapping system 200 includes a bale size sensor 110 that is disposed in the baling chamber and configured to output bale size signals, which correspond to a size of the bale forming in the baling chamber. As used herein, the "size" of the bale refers to a diameter of the bale. The bale size sensor 110 may, for example, be a position sensor associated with one or both of the take up arms 51 to determine the size of the bale based on the position of the take up arm(s) 51. The bale size sensor 110 is operatively coupled to a controller. For convenience of description, the baler controller 510 is referred to as "the controller" further herein, but it should be appreciated that the controller provided according to the present disclosure may be the baler controller 510, the tractor controller 520, and/or the ISOBUS system including the controllers 510, 520 or other controllers.

The controller 510 is operatively coupled to the bale size sensor 110 and the duckbill motor 252. The controller 510 is configured to determine a starting size of a bale in the baling chamber based on at least one received bale size signal from the bale size sensor 110. The controller 510 also outputs an initiation signal to the duckbill motor 252 to initiate a wrap cycle, as previously described. In some embodiments, the controller 510 is configured to determine the starting size of the bale prior to outputting the initiation signal. Alternatively, the controller 510 can be configured to determine the starting size of the bale after outputting the initiation signal as, for example, the duckbill 53 moves to the insert position. After outputting the initiation signal, the controller 510 determines a current size of the bale. When the controller 510 determines that the current size of the bale is less than the starting size by a defined amount, the controller 510 outputs a successful wrap signal in response. The controller 510 may, for example, output the successful wrap signal to the tailgate actuator 19 or a different element to cause the tailgate 13 to open, allowing the bale to be released from the baler 10.

It has been found that the size of the bale decreases as wrapping material is applied due to the wrapping material compressing the bale tightly. By determining that the current size of the bale is less than the starting size of the bale by the defined amount after outputting the initiation signal, which starts the wrap cycle, the controller 510 can determine that the bale has been properly wrapped and output the successful wrap signal. Such a determination is more reliable than, for example, simply monitoring the amount of wrapping material that is drawn from the material roll 213 because the drawn wrapping material may not be wrapped around the bale. It should thus be appreciated that the controller 510 determining the bale size has decreased allows the controller 510 to accurately determine when the bale has been wrapped.

In some embodiments, the controller 510 is configured to determine the wrap cycle has ended and determine the current size of the bale after the wrap cycle has ended. To determine the wrap cycle has ended, the controller 510 may be operatively coupled to a wrap sensor 220 (illustrated in FIG. 2) that is configured to output wrapping signals corresponding to wrapping material being drawn from the material roll 213. The wrap sensor 220 may comprise, for example, a wheel that is rotated by drawn wrapping material. In some embodiments, the wrap sensor 220 outputs the wrapping signals as it is rotating so the controller 510 can determine a length of wrapping material that has been drawn from the material roll 213 based on the number of rotations of the wrap sensor 220. It should be appreciated that the wrap sensor 220 can be other types of sensors, such as optical sensors, to output wrapping signals corresponding to wrapping material being drawn from the material roll 213.

In some embodiments, a pressure sensor 130 is included that is configured to output bale pressure signals corresponding to a current bale density pressure of the bale. The bale density pressure sensed by the pressure sensor 130 increases as the bale becomes larger, and vice versa. The pressure sensor 130 can, for example, output bale pressure signals with a greater amplitude when the exerted pressure is greater and bale pressure signals with a smaller amplitude when the exerted pressure is smaller, allowing the controller 510 to also determine the size of the bale based on the bale pressure signals. Such pressure sensors are known, so further description is omitted for brevity.

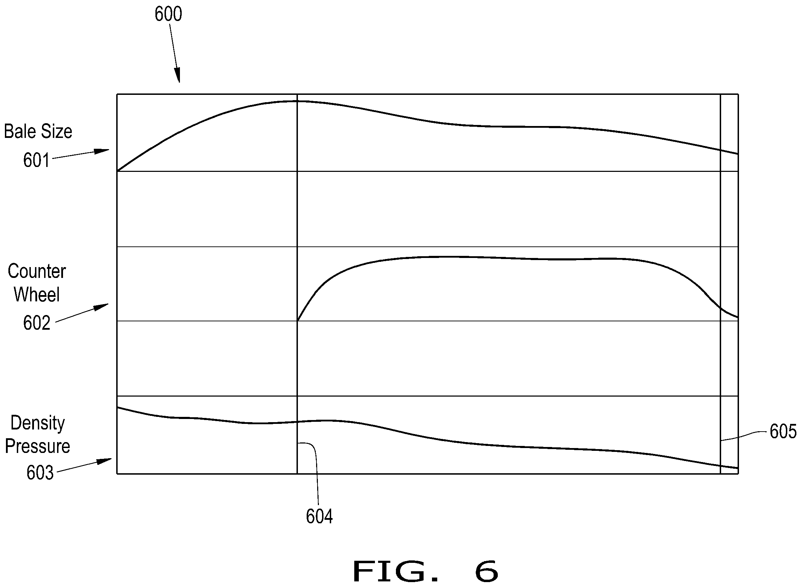

Referring now to FIG. 6, an exemplary graph 600 of signal readouts from the controller 510 during a wrap cycle is illustrated. A top region 601 of the graph 600 corresponds to bale size signals from the bale size sensor 110, a middle region 602 of the graph 600 corresponds to wrapping signals from the wrap sensor 220, and a bottom region 603 of the graph 600 corresponds to bale pressure signals from the pressure sensor 130. As illustrated, vertical line 604 corresponds to when the controller 510 outputs the initiation signal to initiate a wrap cycle and vertical line 605 corresponds to when the controller 510 no longer receives wrapping signals from the wrap sensor 220, indicating that wrapping material is no longer being drawn from the material roll 213 and the wrap cycle has ended. In some embodiments, the controller 510 determines the wrap cycle has ended by determining a length of wrapping material that has been drawn from the material roll 213 is at least a defined length, based on the wrapping signals.

The controller 510 may determine the starting size of the bale at a time point of the vertical line 604 and determine the current size of the bale at a time point of the vertical line 605, with the starting size and current size of the bale being compared to determine that the current size is less than the starting size by a defined amount. In some embodiments, the defined amount is between 2.5 cm and 10 cm. Alternatively, the defined amount can be a certain percentage of the starting size, such as 2%. As can be appreciated from FIG. 6, the bale pressure signals, which can correspond to the size of the bale, decrease as the wrap cycle progresses. Since the change in pressure exerted on the bale pressure sensor 130 by the bale corresponds to the size of the bale, the controller 510 may determine the current size is less than the starting size by the defined amount by determining a pressure drop is at least a threshold amount after outputting the initiation signal. FIG. 6 illustrates a normal wrap cycle where the size of the bale decreases as the applied wrapping material compresses the bale, as determined by determining the size decreasing via bale size signals from the bale size sensor 110 and/or the pressure exerted by the bale on the bale pressure sensor 130 decreasing via bale pressure signals from the bale pressure sensor 130. Thus, the controller 510 can determine that the bale has been successfully wrapped by determining the current size of the bale is less than the starting size by the defined amount and responsively output a successful wrap signal by monitoring the bale size signals and/or the bale pressure signals.

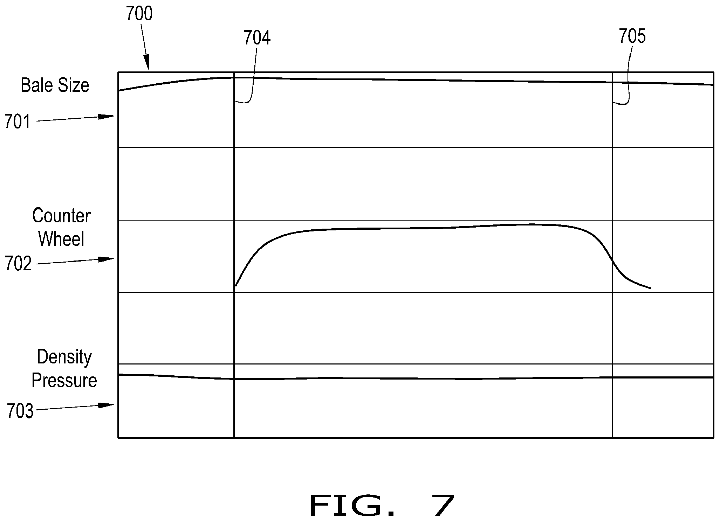

Referring now to FIG. 7, another exemplary graph 700 of signal readouts from the controller 510 during a wrap cycle is illustrated. A top region 701 of the graph 700 corresponds to bale size signals from the bale size sensor 110, a middle region 702 of the graph 700 corresponds to wrapping signals from the wrap sensor 220, and a bottom region 703 of the graph 700 corresponds to bale pressure signals from the pressure sensor 130. As illustrated, vertical line 704 corresponds to when the controller 510 outputs the initiation signal to initiate a wrap cycle and vertical line 705 corresponds to when the controller 510 no longer receives wrapping signals from the wrap sensor 220, indicating that wrapping material is no longer being drawn from the material roll 213 and the wrap cycle has ended. In contrast to FIG. 6, FIG. 7 illustrates an instance where the bale is not successfully wrapped. As illustrated, the size signals from the bale size sensor 110 and the pressure signals from the bale pressure sensor 130 do not change, or only change slightly, as wrapping material is drawn from the material roll 213, which indicates that the drawn wrapping material is not applied to the bale.

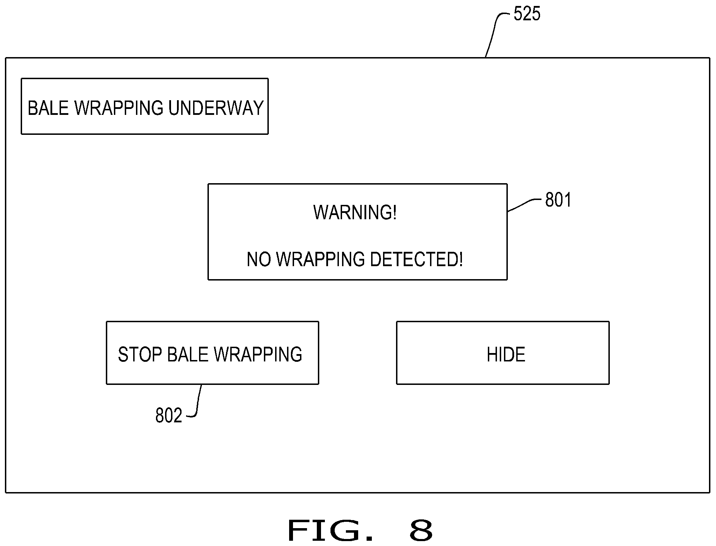

According to the invention, the controller 510 is configured to output a warning signal if the current size of the bale is not less than the starting size by the defined amount, as illustrated in FIG. 7. Referring now to FIG. 8 as well, the controller 510 may output the warning signal to the display 525 so the display 525 presents a warning graphic 801 alerting an operator that wrapping of the bale has not been detected. In some embodiments, the controller 510 is configured to determine that the current size of the bale is not less than the starting size of the bale after a defined time period has elapsed after outputting the initiation signal. In such embodiments, the operator may then be presented with a stop icon 802 that, when selected, causes the display 525 to output a stop signal to the controller 510 so the controller 510 outputs a corresponding stop signal to, for example, a brake 240 associated with the material roll 213. The brake 240 can apply a braking force to the material roll 213 to stop rotation of the material roll 213 and prevent further wrapping material from being misapplied and wasted.

It should be appreciated that the controller 510 may determine that the wrap cycle has ended in other ways than determining the length of drawn wrapping material. In some embodiments, the controller 510 determines the wrap cycle has ended by determining a defined time period has elapsed after outputting the initiation signal. Alternatively, the controller 510 can determine the wrap cycle has ended when the current size of the bale is less than the starting by the defined amount, i.e., the determinations are concurrent.

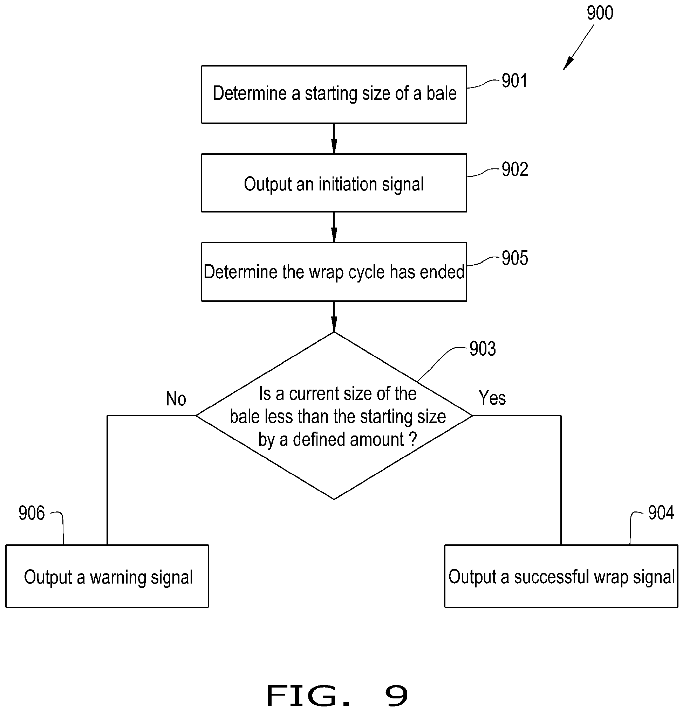

Referring now to FIG. 9, an exemplary embodiment of a method 900 of controlling an agricultural baler 10 is illustrated. The method 900 is performed by a controller, such as the baler controller 510, the tractor controller 520, and/or an ISOBUS system. The method 900 includes determining 901 a starting size of a bale formed in a baling chamber. The controller 510 outputs 902 an initiation signal to a duckbill motor 252 to initiate a wrap cycle. The outputting 902 may occur, for example, after determining 901 the starting size or, in some embodiments, determining 901 the starting size may occur after outputting 902 of the initiation signal. After outputting 902 the initiation signal, a current size of the bale is determined 903 to be less than the starting size of the bale by a defined amount. A successful wrap signal is output 904 responsively to determining 903 that the current size of the bale is less than the starting size of the bale by the defined amount.

Determining 903 the current size of the bale is less than the starting size of the bale by the defined amount may be performed in a variety of ways. The current size may be determined 903, for example, directly from bale size signals from a bale size sensor 110 associated with one or both of the take up arms 51. In some embodiments, determining 903 the current size is less than the starting size by the defined amount includes determining a pressure drop, as sensed by a bale pressure sensor 130, is at least a threshold amount after outputting the initiation signal. Since the pressure exerted by the bale on the bale pressure sensor 130 decreases as the size of the bale decreases, as previously described, the pressure drop of at least the threshold amount indicates that the size of the bale has decreased by the defined amount.

In some embodiments, the method 900 further comprises determining 905 the wrap cycle has ended and determining 903 the current size of the bale is less than the starting size of the bale by the defined amount occurs after the wrap cycle has ended. Determining 905 the wrap cycle has ended may include determining a length of wrapping material that has been drawn from the material roll is at least a defined length. Alternatively, determining 905 the wrap cycle has ended may include determining a defined time period has elapsed after outputting the initiation signal or may be concurrent with determining 903 the current size is less than the starting size by the defined amount.

In accordance with the invention, the method 900 further comprises outputting 906 a warning signal if the current size of the bale is not less than the starting size by the defined amount. The warning signal may be output 906, for example, after the wrap cycle has ended without the current size of the bale becoming less than the starting size by the defined amount. The warning signal may be output 906 to a display 525 or other element, such as an audio speaker, to alert an operator that wrapping of the bale is not detected. According to the invention, the warning signal is output to a brake 240 to stop rotation of the material roll 213.

It is to be understood that the steps of the method 900 are performed by the controller 510 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 510 described herein, such as the method 900, is implemented in software code or instructions which are tangibly stored on a tangible computer readable medium. The controller 510 loads the software code or instructions via a direct interface with the computer readable medium or via a wired and/or wireless network. Upon loading and executing such software code or instructions by the controller 510, the controller 510 may perform any of the functionality of the controller 510 described herein, including any steps of the method 900 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

These and other advantages of the present invention will be apparent to those skilled in the art from the foregoing specification. Accordingly, it is to be recognized by those skilled in the art that changes or modifications may be made to the above-described embodiments without departing from the scope of the invention, which is solely defined by the appended claims.

## Claims

1. A wrapping system (200) for an agricultural baler (10), comprising:
a material roll (213) configured to hold a roll of wrapping material;
a duckbill assembly (250) configured to draw wrapping material from the material roll (213) and comprising a duckbill motor (252);
a bale size sensor (110) configured to output bale size signals; and
a controller (510) operatively coupled to the duckbill motor (252) and the bale size sensor (110), the controller (510) being configured to:
determine a starting size of a bale based on at least one received bale size signal from the bale size sensor (110);
output an initiation signal to the duckbill motor (252) to initiate a wrap cycle;
determine, based on at least one received bale size signal from the bale size sensor (110), if a current size of the bale is less than the starting size of the bale by a defined amount after outputting the initiation signal; and
output a successful wrap signal responsively to determining that the current size is less than the starting size by the defined amount;
**characterized by:**
the wrapping system (200) further comprising a brake (240) associated with the material roll (213) and configured to apply a braking force to the material roll (213) to stop rotation thereof; and
the controller (510) further being configured to output a warning signal to the brake (240) to stop rotation of the material roll (213) if the current size of the bale after the wrap cycle has ended is not less than the starting size by the defined amount.

2. The wrapping system (200) of claim 1, wherein the controller (510) is configured to determine the wrap cycle has ended and determine the current size of the bale after the wrap cycle has ended.

3. The wrapping system (200) of claim 2, further comprising a wrap sensor (220) configured to output wrapping signals corresponding to wrapping material being drawn from the material roll (213) and operatively coupled to the controller (510), the controller (510) being configured to determine the wrap cycle has ended based on a length of wrapping material that has been drawn from the material roll (213).

4. The wrapping system (200) of claim 2 or 3, wherein the controller (510) is configured to determine the wrap cycle has ended by determining a defined time period has elapsed after outputting the initiation signal.

5. The wrapping system (200) of any one of the preceding claims, wherein the bale size sensor (110) is configured to output bale size signals directly corresponding to the current size of the bale.

6. The wrapping system (200) of any one of the preceding claims, further comprising a pressure sensor (130) operatively coupled to the controller (510) and configured to output bale pressure signals to the controller (510), the bale pressure signals corresponding to a bale density pressure of the bale.

7. An agricultural baler (10) comprising a chassis (11), a baling chamber carried by the chassis (11), and the wrapping system (200) of any one of the preceding claims, wherein the bale size sensor (110) is disposed in the baling chamber.

8. A method (900) of controlling the agricultural baler (10) of claim 7, the method (900) being performed by the controller (510) and comprising:
determining (901), based on at least one received bale size signal from the bale size sensor (110), a starting size of a bale formed in the baling chamber;
outputting (902) an initiation signal to the duckbill motor (252) to initiate a wrap cycle;
determining (903), based on at least one received bale size signal from the bale size sensor (110), if a current size of the bale is less than the starting size of the bale by a defined amount after outputting (902) the initiation signal;
outputting (906) a warning signal to the brake (240) to stop rotation of the material roll (213) if the current size of the bale after the wrap cycle has ended is not less than the starting size by the defined amount; and
outputting (904) a successful wrap signal responsively to determining (903) that the current size is less than the starting size by the defined amount.

9. The method (900) of claim 8, further comprising determining (905) the wrap cycle has ended, wherein determining (903) the current size of the bale is less than the starting size of the bale by the defined amount occurs after the wrap cycle has ended.

10. The method (900) of claim 9, wherein determining (905) the wrap cycle has ended comprises determining a length of wrapping material that has been drawn from the material roll (213) is at least a defined length.

11. The method (900) of claim 9, wherein determining (905) the wrap cycle has ended comprises determining a defined time period has elapsed after outputting (902) the initiation signal.

12. The method (900) of any one of claims 8 to 11, wherein determining (903) the current size is less than the starting size by the defined amount comprises determining a pressure drop is at least a threshold amount after outputting the initiation signal.

## Patentansprüche

1. Wickelsystem (200) für eine landwirtschaftliche Ballenpresse (10) mit:
einer Materialrolle (213), die dazu eingerichtet ist, eine Rolle mit Wickelmaterial zu halten;
einer Entenschnabelanordnung (250), die dazu eingerichtet ist, Wickelmaterial von der Materialrolle (213) abzuziehen, und die einen Entenschnabelmotor (252) umfasst;
einem Ballengrößensensor (110), der zum Ausgeben von Ballengrößensignalen eingerichtet ist; und
einer Steuereinrichtung (510), die wirkend mit dem Entenschnabelmotor (252) und dem Ballengrößensensor (110) gekoppelt ist, wobei die Steuereinrichtung (510) eingerichtet ist zum:
Bestimmen einer Anfangsgröße eines Ballens basierend auf mindestens einem empfangenen Ballengrößensignal des Ballengrößensensors (110);
Ausgeben eines Auslösesignals an den Entenschnabelmotor (252), um einen Wickelzyklus auszulösen;
Bestimmen, ob eine aktuelle Größe des Ballens um eine definierte Menge kleiner als die Anfangsgröße des Ballens ist basierend auf mindestens einem empfangenen Ballengrößensignal des Ballengrößensensors (110) nach der Ausgabe des Auslösesignals; und
Ausgeben eines Signals eines erfolgreichen Wickelns in Reaktion auf das Bestimmen, dass die aktuelle Größe um die definierte Menge kleiner als die Anfangsgröße ist;
**dadurch gekennzeichnet, dass**
das Wickelsystem (200) des Weiteren eine Bremse (240) umfasst, die zu der Materialrolle (213) zugehörig ist und die dazu eingerichtet ist, eine Bremskraft auf die Materialrolle (213) auszuüben, um eine Rotation derselben zu stoppen; und
die Steuereinrichtung (510) des Weiteren zum Ausgeben eines Warnsignals an die Bremse (240) eingerichtet ist, um die Rotation der Materialrolle (213) zu stoppen, wenn die aktuelle Größe des Ballens, nachdem der Wickelzyklus beendet ist, nicht um die definierte Menge kleiner als die Anfangsgröße ist.

2. Wickelsystem (200) nach Anspruch 1, wobei die Steuereinrichtung (510) zum Bestimmen, dass der Wickelzyklus beendet ist, und zum Bestimmen der aktuellen Größe des Ballens eingerichtet ist, nachdem der Wickelzyklus beendet ist.

3. Wickelsystem (200) nach Anspruch 2, das des Weiteren einen Wickelsensor (220) umfasst, der zum Ausgeben von Wickelsignalen eingerichtet ist, die dem Abziehen von Wickelmaterial von der Materialrolle (213) entsprechen, und der wirkend mit der Steuereinrichtung (510) gekoppelt ist, wobei die Steuereinrichtung (510) dazu eingerichtet ist, basierend auf einer Länge des Wickelmaterials, das von der Materialrolle (213) abgezogen wurde, zu bestimmen, dass der Wickelzyklus beendet ist.

4. Wickelsystem (200) nach Anspruch 2 oder 3, wobei die Steuereinrichtung (510) dazu eingerichtet ist, durch Bestimmen, dass eine definierte Zeitspanne nach der Ausgabe des Auslösesignals verstrichen ist, zu bestimmen, dass der Wickelzyklus beendet ist.

5. Wickelsystem (200) nach einem der vorhergehenden Ansprüche, wobei der Ballengrößensensor (110) zum Ausgeben von Ballengrößensignalen direkt entsprechend der aktuellen Größe des Ballens eingerichtet ist.

6. Wickelsystem (200) nach einem der vorhergehenden Ansprüche, das des Weiteren einen Drucksensor (130) umfasst, der wirkend mit der Steuereinrichtung (510) gekoppelt ist und zum Ausgeben von Ballendrucksignalen an die Steuereinrichtung (510) eingerichtet ist, wobei die Ballendrucksignale einem Ballendichtendruck des Ballens entsprechen.

7. Landwirtschafte Ballenpresse (10) mit einem Fahrgestell (11), einer Ballenpresskammer, die von dem Fahrgestell (11) getragen wird, und dem Wickelsystem (200) nach einem der vorhergehenden Ansprüche, wobei der Ballengrö-ßensensor (110) in der Ballenpresskammer angeordnet ist.

8. Verfahren (900) zur Steuerung der landwirtschaftlichen Ballenpresse (10) nach Anspruch 7, wobei das Verfahren (900) von dem Steuereinrichtung (510) ausgeführt wird und umfasst:
Bestimmen (901) einer Anfangsgröße eines Ballens, der in der Ballenpresskammer gebildet wird, basierend auf mindestens einem empfangenen Ballengrö-ßensignal des Ballengrößensensors (110);
Ausgeben (902) eines Auslösesignals an den Entenschnabelmotor (252), um einen Wickelzyklus auszulösen;
Bestimmen (903) basierend auf mindestens einem empfangenen Ballengrößensignal des Ballengrößensensors (110), ob eine aktuelle Größe des Ballens um eine definierte Menge kleiner als die Anfangsgröße des Ballens ist, nach der Ausgabe (902) des Auslösesignals;
Ausgeben (906) eines Warnsignals an die Bremse (240), um eine Rotation der Materialrolle (213) zu stoppen, wenn die aktuelle Größe des Ballens, nachdem der Wickelzyklus beendet ist, nicht um die definierte Menge kleiner als die Anfangsgröße ist; und
Ausgeben (904) eines Signals eines erfolgreichen Wickelns in Reaktion auf das Bestimmen (903), dass die aktuelle Größe um die definierte Menge kleiner als die Anfangsgröße ist.

9. Verfahren (900) nach Anspruch 8, das des Weiteren umfasst zu bestimmen (905), dass der Wickelzyklus beendet ist, wobei das Bestimmen (903), dass die aktuelle Größe des Ballens um die definierte Menge kleiner als die Anfangsgröße des Ballens ist, erfolgt, nachdem der Wickelzyklus beendet ist.

10. Verfahren (900) nach Anspruch 9, wobei das Bestimmen (905), dass der Wickelzyklus beendet ist, umfasst zu bestimmen, dass eine Länge von Wickelmaterial, das von der Materialrolle (213) abgezogen wurde, mindestens einer definierten Länge entspricht.

11. Verfahren (900) nach Anspruch 9, wobei das Bestimmen (905), dass der Wickelzyklus beendet ist, umfasst zu bestimmen, dass eine definierte Zeitspanne nach dem Ausgeben (902) des Auslösesignals verstrichen ist.

12. Verfahren (900) nach einem der Ansprüche 8 bis 11, wobei das Bestimmen (903), dass die aktuelle Größe um die definierte Menge kleiner als die Anfangsgröße ist, umfasst zu bestimmen, dass ein Druckabfall mindestens einem Grenzwert entspricht, nachdem das Auslösesignal ausgegeben wurde.

## Revendications

1. Système d'enrubannage (200) pour presse à balles agricole (10), comprenant :
un rouleau de matériau (213) configuré pour maintenir un rouleau de matériau d'enrubannage ;
un ensemble en bec de canard (250) configuré pour tirer le matériau d'enrubannage du rouleau de matériau (213) et comprenant un moteur du bec de canard (252) ;
un capteur de taille de balle (110) configuré pour émettre des signaux de taille de balle ; et
un dispositif de commande (510) couplé de manière fonctionnelle au moteur du bec de canard (252) et au capteur de taille de balle (110), le dispositif de commande (510) étant configuré pour :
déterminer la taille de départ d'une balle en fonction d'au moins un signal de taille de balle reçu du capteur de taille de balle (110) ;
envoyer un signal de déclenchement au moteur du bec de canard (252) afin de lancer un cycle d'enrubannage ;
déterminer, en fonction d'au moins un signal de taille de balle reçu du capteur de taille de balle (110), si une taille actuelle de la balle est inférieure, d'une quantité définie, à la taille de départ de la balle, après avoir émis le signal de déclenchement ; et
émettre le bon signal d'enrubannage en réponse à la détermination que la taille actuelle est inférieure, de la quantité définie, à la taille de départ ;
**caractérisé par :**
le système d'enrubannage (200) comprenant en outre un frein (240) associé au rouleau de matériau (213) et configuré pour appliquer une force de freinage au rouleau de matériau (213) pour arrêter sa rotation ; et
le dispositif de commande (510) étant en outre configuré pour envoyer un signal d'avertissement au frein (240) afin d'arrêter la rotation du rouleau de matériau (213) si la taille actuelle de la balle après la fin du cycle d'enrubannage n'est pas inférieure, de la valeur définie, à la taille de départ.

2. Système d'enrubannage (200) selon la revendication 1, dans lequel le dispositif de commande (510) est configuré pour déterminer si le cycle d'enrubannage est terminé et déterminer la taille actuelle de la balle après la fin du cycle d'enrubannage.

3. Système d'enrubannage (200) selon la revendication 2, comprenant en outre un capteur d'enrubannage (220) configuré pour émettre des signaux d'enrubannage correspondant au matériau d'enrubannage tiré du rouleau de matériau (213) et couplé de manière fonctionnelle au dispositif de commande (510), le dispositif de commande (510) étant configuré pour déterminer si le cycle d'enrubannage s'est terminé, en fonction d'une longueur de matériau d'enrubannage qui a été tirée du rouleau de matériau (213).

4. Système d'enrubannage (200) selon la revendication 2 ou 3, dans lequel le dispositif de commande (510) est configuré pour déterminer si le cycle d'enrubannage s'est terminé en déterminant si une période définie s'est écoulée après l'émission du signal de déclenchement.

5. Système d'enrubannage (200) selon l'une quelconque des revendications précédentes, dans lequel le capteur de taille de balle (110) est configuré pour émettre des signaux de taille de balle correspondant directement à la taille actuelle de la balle.

6. Système d'enrubannage (200) selon l'une quelconque des revendications précédentes, comprenant en outre un capteur de pression (130) couplé de manière fonctionnelle au dispositif de commande (510) et configuré pour émettre des signaux de pression de balle au dispositif de commande (510), les signaux de pression de balle correspondant à une pression de densité de balle de la balle.

7. Presse à balles agricole (10) comprenant un châssis (11), une chambre de mise en balles supportée par le châssis (11) et le système d'enrubannage (200) selon l'une quelconque des revendications précédentes, dans laquelle le capteur de taille de balle (110) est disposé dans la chambre de de mise en balles.

8. Procédé (900) de commande de la presse à balles agricole (10) selon la revendication 7, le procédé (900) étant réalisé par le dispositif de commande (510) et comprenant :
la détermination (901), en fonction d'au moins un signal de taille de balle reçu du capteur de taille de balle (110), d'une taille de départ d'une balle formée dans la chambre de mise en balles ;
l'émission (902) d'un signal de déclenchement vers le moteur du bec de canard (252), afin de lancer un cycle d'enrubannage ;
la détermination (903), en fonction d'au moins un signal de taille de balle reçu du capteur de taille de balle (110), d'une taille actuelle de la balle est inférieure à la taille de départ de la balle d'une quantité définie après l'émission (902) du signal de déclenchement ;
l'émission (906) d'un signal d'avertissement au frein (240) afin d'arrêter la rotation du rouleau de matériau (213) si la taille actuelle de la balle après la fin du cycle d'enrubannage n'est pas inférieure, de la quantité définie, à la taille de départ ; et
l'émission (904) du bon signal d'enrubannage en réponse à la détermination (903) que la taille actuelle est inférieure, de la quantité définie, à la taille de départ.

9. Procédé (900) selon la revendication 8, comprenant en outre la détermination (905) que le cycle d'enrubannage s'est terminé, dans lequel la détermination (903) que la taille actuelle de la balle est inférieure, de la quantité définie, à la taille de départ de la balle, a lieu après la fin du cycle d'enrubannage.

10. Procédé (900) selon la revendication 9, dans lequel la détermination (905) de la fin du cycle d'enrubannage comprend la détermination d'une longueur de matériau d'enrubannage qui a été tirée du rouleau de matériau (213) est au moins d'une longueur définie.

11. Procédé (900) selon la revendication 9, dans laquelle la détermination (905) de la fin du cycle d'enrubannage comprend la détermination d'une période de temps définie qui s'est écoulée après l'émission (902) du signal de déclenchement.

12. Procédé (900) selon l'une quelconque des revendications 8 à 11, dans laquelle la détermination (903) que la taille actuelle est inférieure, de la quantité définie, à la taille de départ comprend la détermination d'une chute de pression d'au moins une quantité seuil après l'émission en sortie du signal de déclenchement.
